# EUROPEAN PATENT APPLICATION

(11) **EP 3 203 412 A1**
(43) Date of publication of application: **09.08.2017**
(21) Application number: 16154542.1
(22) Date of filing: 05.02.2016
(51) Int. Cl.: G06K 9/00, G06F 3/01

(54) **SYSTEM AND METHOD FOR DETECTING HAND GESTURES IN A 3D SPACE**

(71) Applicant: Delphi Technologies, Inc., Troy MI 48007 (US)
(72) Inventor: Barth, Alexander, 42111 Wuppertal (DE); Nunn, Christian, 42499 Hückeswagen (DE); Müller, Dennis, 47445 Moers (DE)
(74) Representative: Manitz Finsterwald Patentanwälte PartmbB

(57) **Abstract**

A system for detecting hand gestures in a 3D space comprises a 3D imaging unit configured to capture 3D images of a scene and a processing unit coupled to the 3D imaging unit. Each of the 3D images comprises a 2D intensity image of the scene. The processing unit is configured to receive the 3D images from the 3D imaging unit and use the 2D intensity image of at least one of the 3D images to classify the at least one 3D image, wherein classifying the at least one 3D image comprises distinguishing a hand in the 2D intensity image from other body parts and other objects and/or verifying whether the hand has a configuration from a predetermined configuration catalogue. The processing unit is further configured to detect a hand gesture in the 3D images based on the classification of the at least one 3D image.

## Description

The present application relates to a system and a method for detecting hand gestures in a 3D space.

Hand gestures have become a popular and intuitive input method to control or interact with computers, game consoles, TVs, or other electronic devices. Recently this technology has also entered the automotive domain and allows, for example, controlling a vehicle's infotainment system with hand gesture commands.

In such applications, a sensor is monitoring a given area in space, typically in front of an output unit, e. g., a screen, display, etc. The sensor data are transferred to and processed by a processing unit that analyzes the incoming data for hand gestures, for example, swipe gestures, hand waving, static hand poses, grabbing, pinching, rotations with the index finger, etc.

The user is able to perform such gestures within the field of view of the sensor. A key challenge of such approaches is to distinguish intended gestures from arbitrary hand movements or random hand poses, for example during normal operation of a car.

Sensors can be in particular 2D and 3D imaging devices such as monochromic or color cameras, stereo cameras, time-of-flight cameras, or structured-light cameras.

Common approaches include the localization and segmentation of the hand and individual fingers, extracting characteristic points of the hand, such as finger tips or the palm center, tracking of such points over time and analyzing the point trajectories over time. The characteristics points can be, for example, 2D or 3D coordinates.

One common approach to perform gesture recognition based on 3D imagery is to localize the hand based on depth segmentation, e.g. isolating the hand from the background of the scene as well as from other body parts such as torso or arm, and analyzing the resulting cluster of points or pixels in an image. Individual finger tips are localized, for example, by profile analysis of foreground segmentation results in combination with geometrical assumptions and constraints, fitting hand models to the input data, detecting local discontinuities of silhouette curvature, or based on morphological skeletonizing.

Prior art solutions relying on the extraction of characteristic points of a hand based on very local information suffer from the problem of verifying that these points really belong to a human hand. These systems are in particular sensitive to false detections, since they cannot reliably distinguish hands from other objects or hands holding other objects, e.g. a newspaper, bottle, cellphone, etc.

Frequent false detections cause user frustration and can significantly impact the acceptance of gesture control technology as an alternative to traditional input devices such as knobs, buttons, touch pads, sliders, etc.

Alternative methods use annotated training samples to learn to detect gestures based on given input data. Such methods typically implicitly or explicitly incorporate more global context information, e.g. by looking at the full image and depth map data or larger sub-regions instead of very local regions. These methods can achieve very good detection results at low false alarm rates, but typically require large amounts of training data. Manual annotation can be very time consuming and thus expensive. At the same time, it is not possible to adapt the output of such systems as simple as changing a few parameter values. For example, if a gesture should be detected where a given distance is travelled along a certain direction and one later wants to modify that distance, new training data has to be provided in general.

It is therefore an object of the invention to provide a system and a method that allow for reliably detecting hand gestures in a 3D space with low computational effort and reduced risk of false alarms.

The aforementioned object is solved by the features of the independent claims.

According to an aspect of the invention, a system for detecting hand gestures in a 3D space comprises a 3D imaging unit configured to capture 3D images of a scene and a processing unit coupled to the 3D imaging unit. Each of the 3D images comprises a 2D intensity image of the scene. The processing unit is configured to receive the 3D images from the 3D imaging unit and use the 2D intensity image of at least one of the 3D images to classify the at least one 3D image. Classifying the at least one 3D image comprises distinguishing a human hand in the 2D intensity image from other body parts and other objects and/or verifying whether the hand shown in the 2D intensity image has a configuration from a predetermined configuration catalogue. The processing unit is further configured to detect a hand gesture in the 3D images based on the classification of the at least one 3D image.

The aforementioned system for detecting hand gestures overcomes the problem of conventional gesture detection systems purely relying on the extraction of characteristic points of a hand based on local information and geometrical model assumptions, by adding an image classification component verifying the object of interest really belongs to a human hand.

At the same time, the flexibility is kept to parameterize the system by separating the motion analysis from the hand pose analysis. With such concept, new gestures can be easily defined based on the catalogue of hand configurations or poses which are reliably distinguished from non-gesture hands or other objects, and a catalogue of base trajectories such as swipe along a certain direction, e.g. left/right/up/down/forward/backward, circular trajectories, waving, freezing such as a stationary hand pose for some time, or combinations of the former.

This is a key advantage over pure learning based methods that require large amounts of training sets for each gesture and each modification of such gesture.

Incorporating the classification of the input data based on image recognition methods can significantly reduce the number of false alarms, since it can contain more information than extracted 3D coordinates or other man-made hand features.

The at least one 3D image comprises a plurality of pixels and the processing unit may detect pixels in the at least one 3D image potentially belonging to the image of a hand before the at least one 3D image is classified. Only the section of the 3D image may be used to classify the at least one 3D image that contains pixels potentially belonging to the image of the hand, i.e. pixels belonging to hand candidates. This feature can dramatically reduce the search space for the classification of the 3D image.

The processing unit may be further configured to filter the at least one 3D image in order to increase the contrast between pixels potentially belonging to the image of the hand and pixels potentially not belonging to the image of the hand. For example, pixels potentially belonging to the image of the hand are set to a unique value, such as 1, and pixels potentially not belonging to the image of the hand are set to a different unique value, such as 0.

In one embodiment, the processing unit generates a 3D sub-image of the at least one 3D image that includes the image of the hand and use the 2D intensity image of the 3D sub-image for the classification of the at least one 3D image.

The processing unit may be further configured to scale image data of the at least one 3D image such that the 3D sub-image has a predetermined size and/or to rotate image data of the at least one 3D image such that a principal axis of the hand is aligned or mapped to a pre-determined axis in the 3D sub-image. This realignment provides a great amount of invariance towards the actual hand position, its orientation and its size in the original image and thus increases the robustness of the image classification.

It can be provided that only the 2D intensity image of the at least one 3D image or a section thereof, such as a 2D intensity sub-image, is used to classify the at least one 3D image. In an alternative embodiment, the processing unit uses the 2D intensity image and a depth map of the scene to classify the at least one 3D image.

The predetermined configuration catalogue may comprise a predetermined number of classes of hand configurations, for example, index finger exposed, V-shape between index and middle finger, flat hand, five fingers stretched out, thumb and index finger touching, fist, fist with thumb left or right, etc. The processing unit may determine a probability value for each of the classes, wherein each probability value indicates the probability that the hand configuration in the at least one 3D image belongs to the respective class.

The processing unit may generate a discrete output state for the at least one 3D image based on the probability values for the classes.

According to one embodiment, the processing unit specifies that the hand configuration in the at least one 3D image does not belong to any of the classes if the difference between the highest probability value and the second highest probability value is smaller than a predetermined threshold.

The processing unit may use a convolutional neural network for the classification of the at least one 3D image.

After the classification of the 3D image, the processing unit may compute hand coordinates if the image of a hand has been detected in the 3D image.

The processing unit may detect the motion of the hand in the 3D images and, subsequently, detect a gesture of the hand in the 3D images, wherein the detection of the hand gesture in the 3D images is based on the motion of the hand and the classification of the at least one 3D image.

The 3D imaging unit may be one of a time-of-flight camera, a stereo vision camera and a structured light camera. In case of a time-of-flight camera the 2D intensity image may be an amplitude image. i.e. showing the signal strength of the incoming infrared light signal. In case of a stereo vision camera the 2D intensity image may also refer to an image of the visible light, infrared light, or a combination of visible light and active infrared illumination.

According to a further aspect of the invention, a vehicle comprises a system as detailed above. The system can be used, for example, to control or interact with an infotainment system or other electronic devices installed in the vehicle.

According to yet a further aspect of the invention, a method for detecting hand gestures in a 3D space comprises capturing 3D images of a scene, wherein each of the 3D images comprises a 2D intensity image of the scene, and using the 2D intensity image of at least one of the 3D images to classify the at least one 3D image. Classifying the at least one 3D image comprises distinguishing a hand in the 2D intensity image from other body parts and other objects and/or verifying whether the hand has a configuration from a predetermined configuration catalogue. The method further comprises detecting a hand gesture in the 3D images based on the classification of the at least one 3D image.

The method may include the same embodiments as described above in connection with the system.

Embodiments of the invention are described in detail below with reference to the attached drawing figures of exemplary scale, wherein:
Fig. 1 is a schematic diagram of a system for detecting hand gestures in a 3D space;
Fig. 2 illustrates an example of a catalogue including predetermined hand configurations;
Fig. 3 illustrates an example of a no hand configuration detected by the system;
Fig. 4 is a schematic diagram of an embodiment of a processing unit;
Fig. 5 shows examples of an amplitude image, a depth map and a foreground depth map with a confirmed hand;
Fig. 6 shows an example of a binary foreground map at lower resolution than the original resolution;
Fig. 7 shows an example of a filtered binary foreground map at the original resolution;
Fig. 8 shows an example of a 2D intensity sub-image after transforming and scaling the input image data inside the hand candidate region;
Fig. 9 shows an example of a discrete output class 'one finger' obtained from classifying a 3D image; and
Fig. 10 shows an example of computed hand coordinates, i.e. finger tip and hand center.

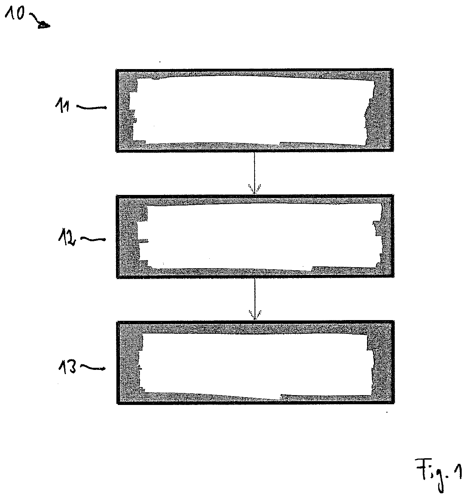

Referring now to Fig. 1, in one embodiment, a system 10 for detecting hand gestures in a 3D space includes a 3D imaging unit 11, a processing unit 12 coupled to the 3D imaging unit 11 and an output unit 13 coupled to the processing unit 12. The system 10 can be installed in a vehicle.

The 3D imaging unit 11 captures 3D images of a scene inside and/or outside the vehicle. The 3D imaging unit 11 provides both a 2D intensity image of the scene and a depth map. The 2D intensity image is a 2D grid of pixels and each pixel has a value that indicates the intensity (or signal strength or amplitude) of the light signal received by the respective pixel. The depth map is an image of the same size as the 2D intensity image, where each pixel stores information relating to the distance of the surfaces of subjects in the scene from the 3D imaging unit 11.

The 3D imaging unit 11 can be, for example, a time-of-flight camera. A time-of-flight camera resolves distance based on the known speed of light, measuring the time of flight of a light signal between the camera and the subject for each point of the image. A time-of-flight camera may, for example, include an infrared light emitting diode sending out infrared light, in particular a pulsed infrared light signal, and a camera sensor receiving the infrared light after the infrared light has been reflected by a subject. The time-of-flight camera has the advantage of suppressing the ambient light, e.g. sunlight. Thus only the infrared light from the active infrared illumination is captured.

Alternative sensors include, for example, stereo vision cameras or structured light cameras.

The 3D imaging unit 11 can further be enhanced by a color sensitive image sensor.

The processing unit 12 receives the input stream from the 3D imaging unit 11 and processes the received 3D images for hand gestures. The processing unit 12 uses the 2D intensity image of at least one of the received 3D images to classify the at least one 3D image. For the classification of the at least one 3D image, the processing unit 12 is trained to distinguish a human hand of arbitrary poses from other body parts or other objects based on the 2D intensity image. In addition, the depth map of the at least one 3D image can be used as a further input to distinguish a human hand from other body parts or other objects.

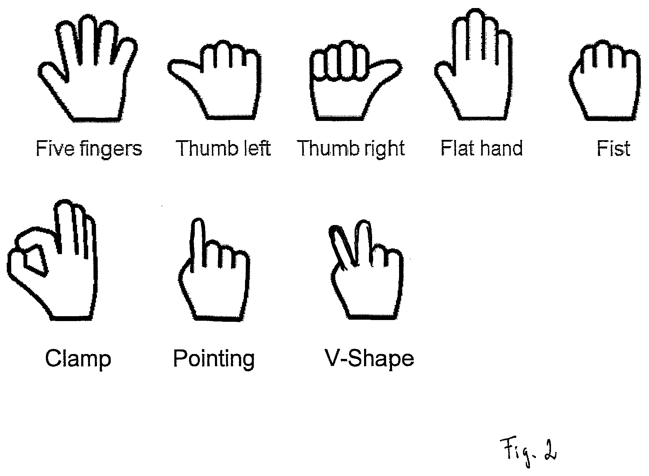

Further, the processing unit 12 verifies whether the hand in the 2D intensity image has a configuration from a predetermined configuration catalogue. The predetermined configuration catalogue comprises, for example, one or more of the following hand configurations (or hand poses): five fingers stretched out, fist with thumb left, fist with thumb right, flat hand, fist, thumb and index finger touching ('grab gesture' or 'clamp'), fist with index finger exposed ('pointing'), V-shape between index and middle finger ('peace sign') and other non-gesture hand configurations. Figure 2 schematically illustrates the aforementioned hand configurations.

The processing unit 12 uses the results of the classification step of the at least one 3D image to detect a hand gesture in the 3D images.

The output unit 13 has a communication layer that is able to transmit gesture events detected by the processing unit 12. Example implementations include TCP/IP, UDP/IP protocols over Ethernet, or CAN communication.

The system 10 helps to significantly reduce the risk of false alarms, since it allows blocking gesture events triggered by movements of other objects or body parts, or false alarms when the hand holds an object. In addition, the system 10 is robust in distinguishing individual gestures from each other because it incorporates knowledge about the whole image pattern of the hand plus additional information, e.g. the depth map. This enables a very high classification rate of individual gestures with a very low false alarm rate or misclassification rate at the same time.

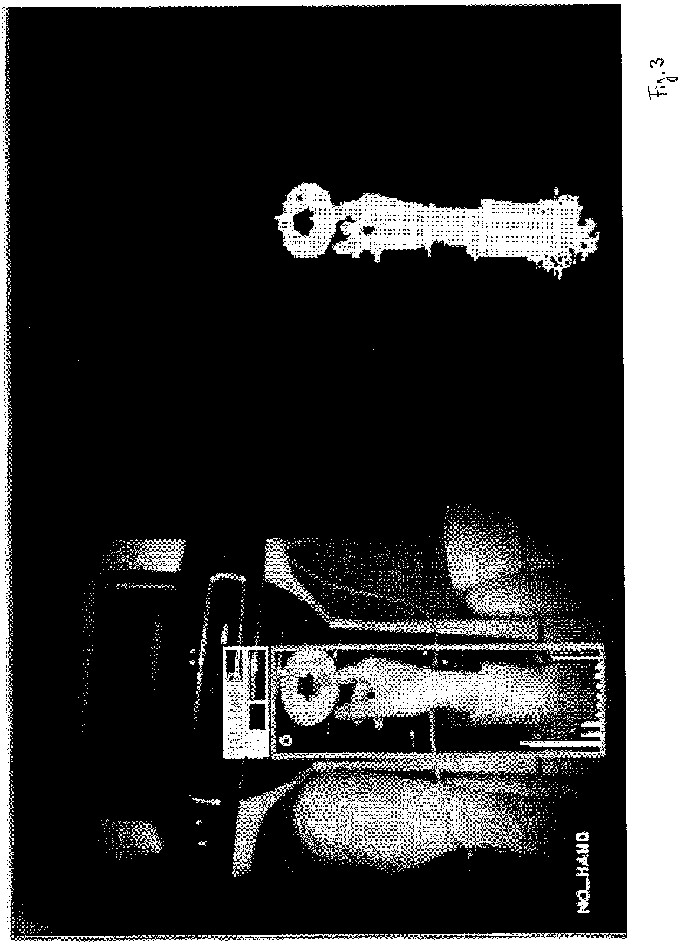

In the example shown in Fig. 3 the hand holds a CD. A conventional system relying on the circular hole of the CD may detect a 'clamp' hand pose in this case. By contrast, the system 10 presented herein rejects this image as a 'no hand' configuration with a high certainty.

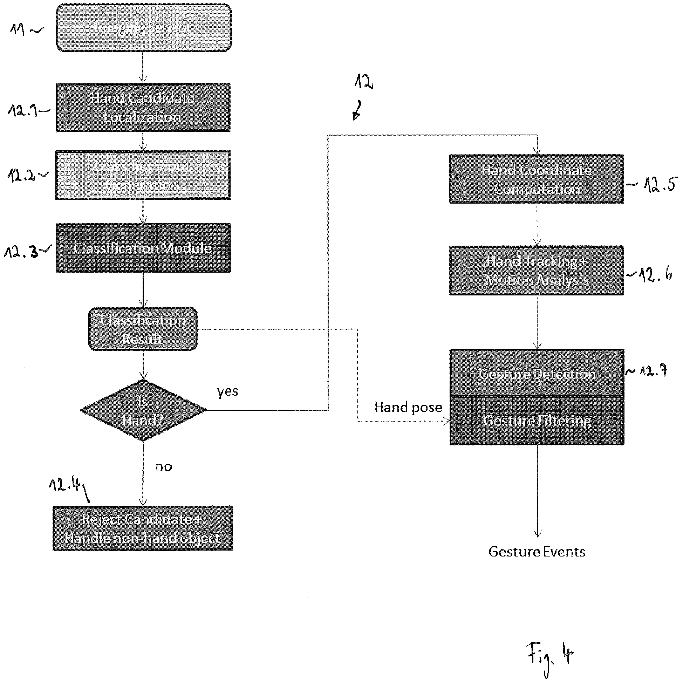

An embodiment of the processing unit 12 is schematically illustrated in Fig. 4. Here the processing unit 12 consists of modules 12.1 to 12.7, which can be separate units, but can also be integrated into the same unit.

The module 12.1 receives the input stream from the 3D imaging unit 11 and localizes a hand candidate in at least one of the received 3D images. This step involves the detection of potential pixels in the 3D image belonging to a hand. Approaches that can be employed by the module 12.1 include:
- depth segmentation, i.e., clustering of points based on common distance;
- motion segmentation, i.e., clustering of points based on coherent motion;
- intensity/color segmentation, i.e., clustering of points based on a consistent intensity, color, or texture; and
- hybrid approaches, i.e., combination of clustering methods based on a combination of the above.

In case of a stationary 3D imaging unit 11 and a mainly stationary background, approaches for foreground/background segmentation based on background models are used widely. The background model can be initialized, for example, from training data, image statistics during an initialization phase, or based on model assumptions, e.g. maximum distance threshold so that all points further away are considered background. The background model can be updated at runtime based on measurement statistics, e.g. long-term averaging, histograms, Gaussian Mixture Models, etc.

Significant deviations between the current observation and the background model are detected and considered 'foreground'. The background model can consist of all input channels, or only a subset of input channels.

The first output of the module 12.1 is a foreground map, i.e., an image where each pixel has a unique value for foreground, e.g. 1, and background, e.g. 0.

The second output of the module 12.1 is a filtered foreground map that only contains foreground pixels belonging to a cluster of pixels that fulfills a number of basic geometric constraints, for example, on size, aspect ratio, orientation, position in the image, etc. Such a cluster of pixels is also referred to as a 'filtered foreground segment' in the following.

The foreground segment computation includes the definition of neighborhood relationships and grouping of foreground pixels, for example, using the well-known connected components algorithm or derivatives of this method. Instead of using a binary mask to represent the filtered foreground map, a numeric image is used, where each pixel contains a numerical value corresponding to a cluster ID of the cluster to which the given pixel has been assigned during the connected components step.

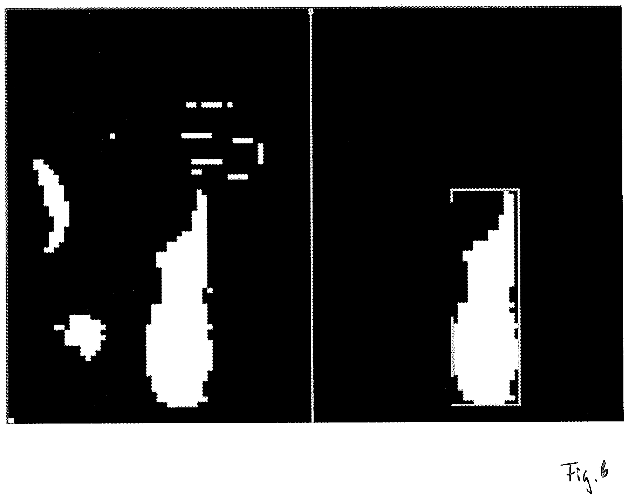

In order to speed up the computation, hierarchical segmentation steps based on image pyramids are widely used to implement a coarse to fine approach. The images are first processed on a lower resolution, as for example shown in Fig. 6, the result is then propagated to the next scale for refinement.

The cluster IDs can be assigned in the order of processing the pixels for each discrete time step or based on some specific logic, e.g. sorted based on size, image position etc. If information on the clustering from previous time steps is available, e.g. from tracking, this information can also be incorporated to ensure a time consistent enumeration of foreground segments belonging to the same object. The latter is preferable here, but could also be addressed at later processing steps in the processing chain.

A third output of the module 12.1 are basic parameters of each filtered foreground segment, for example, the total number of foreground pixels, the center of gravity, the principal axes derived, for example from the segments covariance matrix, and the segments bounding box, capturing the minimum and maximum coordinates of the segment.

The foreground segmentation step can significantly restrict the search space. Approaches detecting the hand by a greedy search with image classification methods, i.e., placing many different regions of interest as hypotheses in an image and then run a combination of detectors and classifiers, e.g. cascaded approaches, to reject or confirm these hypotheses, can be computationally expensive. With a proper foreground segmentation approach, in particular using the depth information, one can ideally restrict the search space to only one hypothesis per hand in the scene. In practice one can still generate a few hypotheses for each filtered foreground segment in order to reduce the impact of errors and inaccuracies in the foreground segmentation steps.

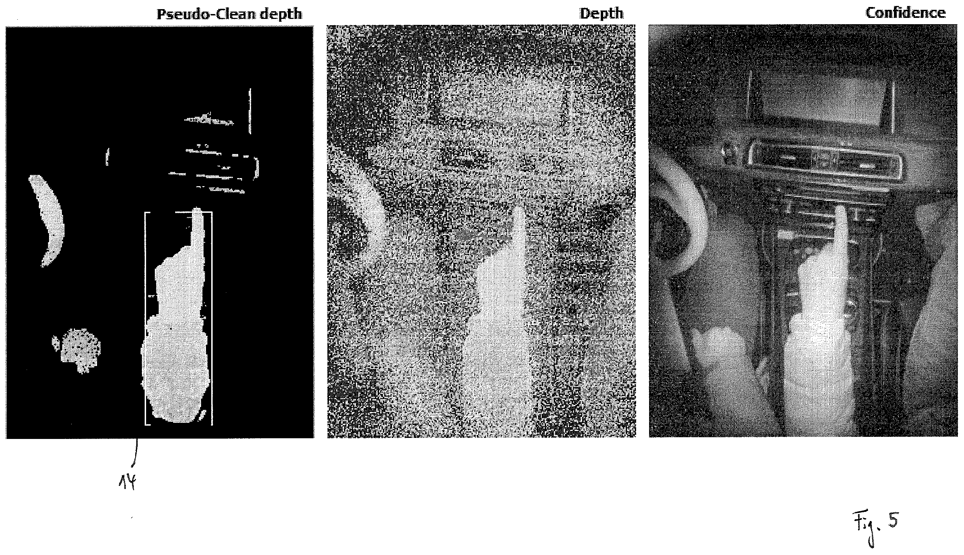

Fig. 5 shows examples of an amplitude image (right), a depth map (middle) and a foreground depth map with a confirmed hand with a bounding box 14 superimposed (left).

Fig. 6 shows an example of a binary foreground map at lower resolution than the original resolution where white pixels are assumed to be foreground and black pixels are background. The left hand side of Fig. 6 shows all foreground pixels and the right hand side shows a foreground map containing only clusters of foreground pixels fulfilling a minimum size constraint with a surrounding bounding box superimposed.

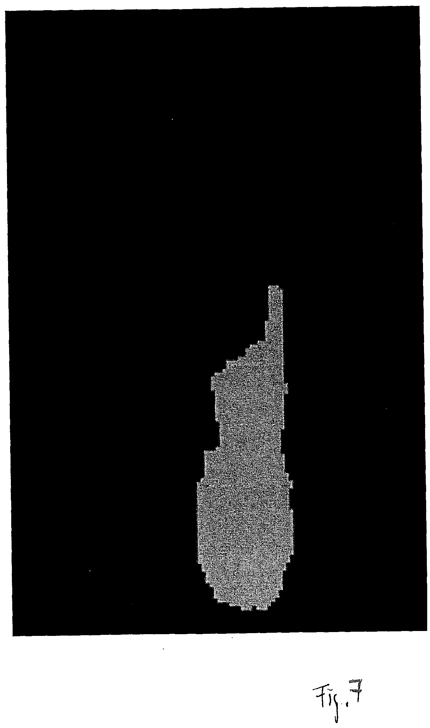

Fig. 7 shows an example of a filtered binary foreground map at the original resolution including only foreground pixels belonging to a hand candidate.

The module 12.2 receives the output data from the module 12.1 and generates input data to the module 12.3, i.e. the classification module, based on a list of filtered foreground segments.

For each filtered foreground segment, one or more of the following steps are performed by the module 12.2:
- Analyze segment properties, e.g. bounding box, position, orientation, size, in order to decide whether segment could contain a significant part of an arm in addition to the hand;
- Reject segments that cannot belong to a hand based on physical constraints, e.g. size or aspect ratio;
- Coarsely remove pixels belonging to the arm with a high likelihood based on geometric constraints, texture, and model assumptions; keep pixels that also might be part of the hand or the wrist;
- Recompute foreground segment statistics for remaining hand candidate pixels (refined foreground segment);
- Predict palm center position;
- Define local hand coordinate system based on predicted palm center position and foreground segment principal axes; and
- Rotate and scale input image data to a defined sub-image space that can have a smaller resolution that the original input image; in the resulting sub-image, the hand orientation is stabilized, i.e. the first principal axis of the hand is mapped to the horizontal axis of the sub-image pixel coordinate system and the second principal axis of the hand is mapped to the vertical axis of the sub-image pixel coordinate system.

Rotating and scaling can be applied to all input channels, i.e. the 2D intensity image, the depth map or the foreground label image. The module 12.2 thus generates a 3D sub-image of the at least one 3D image that includes the image of the hand candidate, wherein the 3D sub-image is scaled and rotated such that the 3D sub-image has a predetermined size and a principal axis of the hand is aligned to a pre-determined axis in the 3D sub-image.

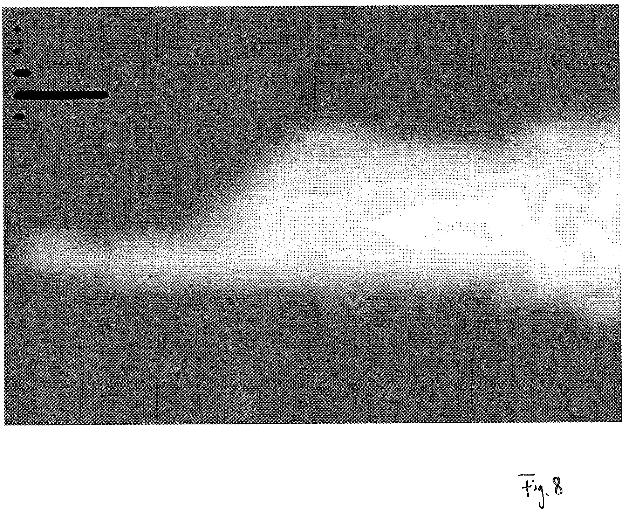

Fig. 8 shows an example of a 2D intensity sub-image after transforming and scaling the input image data inside the hand candidate region.

The module 12.3, i.e. the hand classification module, takes the sub-image input channels from the module 12.2 as input and computes a class probability for a predefined number of classes. For this purpose, the predetermined configuration catalogue includes a predetermined number of classes of hand configurations, for example, each class includes one of the hand configurations illustrated in Fig. 2. The module 12.3 determines a probability value for each of the classes indicating the probability that the hand configuration in the at least one 3D image belongs to the respective class. Based on these class probabilities, a discrete output state is generated by the module 12.3 for the at least one 3D image.

The module 12.3 may use a variant of convolutional neural networks (CNN), where the input images are processed by a number of convolutional kernels. The outputs of the convolution operations are combined in a layered architecture. A deep layered architecture allows separating different hand configurations even though the variation within these classes is high, the position and scale of the hand is not fully compensated/determined or other objects are present in the same image window.

In an offline training step, the parameters of the convolutional neural network are trained based on a high number of annotated training samples. Each training sample consists of a sub-image version of the input data. Each training sample of the same class is individually captured and thus shows an image of the same hand configuration, but all training samples are slightly different, e.g. the position and/or the orientation of the fingers, the distance of the hand to the senor etc. are slightly different. Such training samples are generated with the same processing chain as for the runtime operation. The sub-images are manually annotated with the target output class.

The output class scores are transformed into a discrete output class. In one embodiment, the class with the maximum output score is selected as the discrete output class ('winner takes all').

In a further embodiment, the difference between the highest probability value and the second highest probability value is determined. If the difference is below a defined threshold, the output class is set to a unique class 'UNKNOWN'.

For further improvement a deep learning network can also scan images to find the best matching hand position, or do pixel segmentation to separate the hand from others or background, for example, hand segmentation without the depth map to increase reliability for 3D sensor segmentation.

The deep learning network can also predict positions of prominent parts of the hand, e.g. the finger tip or the hand center of gravity.

The stability of the output class decision is further improved by temporal reasoning. The output scores from multiple time instances are considered.

One solution would be to low-pass filter the output scores before the decision making.

Another solution also incorporates state transition likelihoods. These likelihoods can reflect, for example, that a state transition between one and another class are more or less likely. This allows incorporating knowledge about expected sequences of hand configurations, for example, during the execution of a gesture.

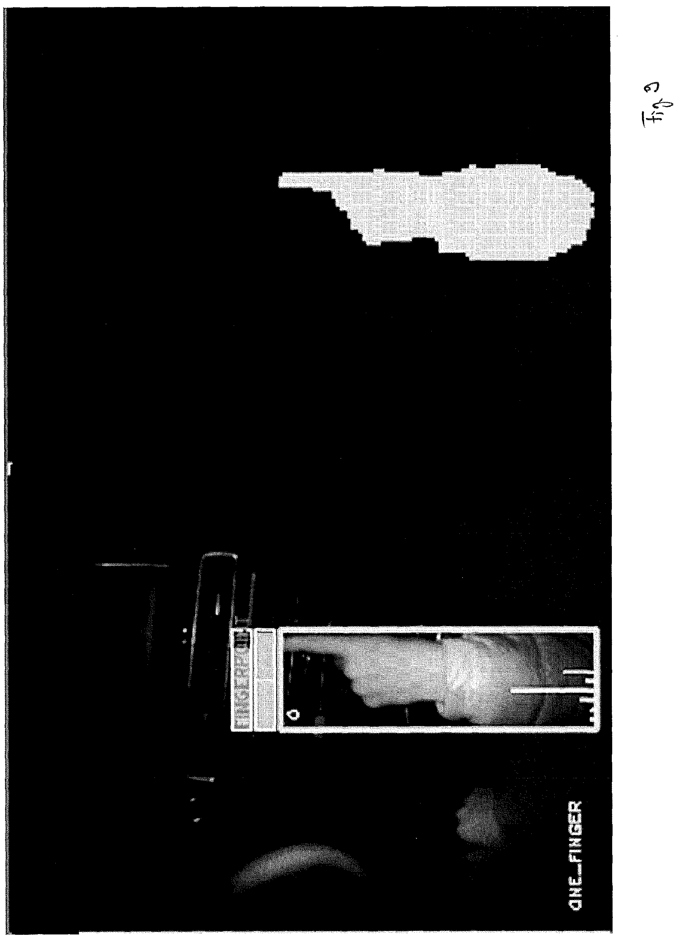

Fig. 9 shows an example of an output of the module 12.3. Here the output class scores have been transformed into the discrete output class 'one finger' (or 'index finger exposed').

In case the results generated by the module 12.3 indicate that the at least one 3D image does not include a human hand, the module 12.4 rejects the hand candidate and handles it as a non-hand object.

Segments classified as a hand by the module 12.3 are further analyzed by the module 12.5 to compute hand coordinates and, in particular, to derive characteristic points on the hand, for example, the hand center or the tips of visible fingers.

A variety of approaches can be employed to extract such feature points.

The projected center of the hand can be computed in the image domain as a the centroid of the foreground blob, although this point might actually not lie on the hand, but could also lie on the wrist or forearm depending how much of the arm is still visible in the refined foreground segment.

Alternatively the position can be refined to be placed on the actual hand, e.g. by incorporating distances to the segment contour, finger tips etc., or based on regression based machine learning methods that output a numeric value corresponding to the position of the hand center based on training data.

Given the image coordinates of the hand center and the known intrinsic parameters of the camera, e.g. from a calibration step, one can compute the optical ray through that image coordinate and the optical center of the camera. The hand center position in 3D must lie on that ray.

If distance information is available from the input sensor, a 3D coordinate can be computed.

In one embodiment, the distance is computed for a given characteristic point based on an iterative procedure that takes into account the mean and standard deviation of depth map values within a small region, e.g. 3x3 or 5x5 window, about the center coordinate. Invalid pixels are ignored in this step; outliers are detected and rejected in an iterative scheme.

The projections of finger tips in the image domain are detected, for example, by finding extreme points along the foreground segment's contour and further processing the neighborhood of such extreme points to reject points that have a low likelihood to belong to an actual finger.

Alternative approaches include computing the morphological skeleton of the refined foreground segment. If 3D point cloud data is used as input, there exist several approaches to fit a hand model to the 3D data, e.g. using self-organizing maps, or utilizing structuring elements specialized to detect finger tip candidates in 3D point cloud data.

The depth coordinate of finger tip positions can be computed analog to the hand center coordinate. However, since finger tip coordinates are close to depth edges they are more sensitive to outliers and noise. To further stabilize the depth estimation at the finger tips, depth measurements along the corresponding finger are also taken into account and a linear model is fit to the depth data along a line of pixels on the finger.

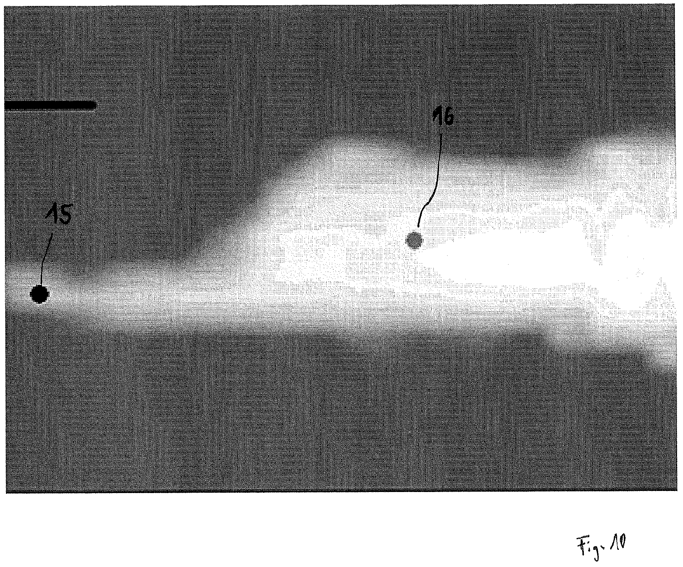

Fig. 10 shows an example of computed hand coordinates including a finger tip 15 and a hand center 16.

The module 12.6 performs hand tracking and motion analysis. This step involves the temporal assignment and smoothing of the hand coordinates computed by the module 12.5.

A 3D velocity vector can be computed for each characteristic point, for example, by a Kalman filter approach. One can use a Kalman filter with linear motion model and constant velocity, but other motion models or filter approaches, e.g. simple low-pass filtering of the coordinates and differential velocity vectors from consecutive frames, would provide similar results.

The information about the absolute velocity can be used to reject movements that are either too slow or too fast compared to configurable thresholds in order to trigger a gesture in further processing steps.

The information about the linear motion direction can be used to filter out movements from further processing steps.

The module 12.7 performs gesture detection and filtering. This step covers the decision making. The module 12.7 uses as input the raw 3D hand coordinates, the filtered hand coordinates and the 3D velocity vectors received from the module 12.6 and the classifier output state received from the module 12.3. The latter is an essential input in order to reduce the number of false detections.

There are many ways to detect actual gestures based on this information, including parametric models, state machines, time-recursive stochastic models, e.g. Hidden Markov Models, or classification methods, e.g. neural networks, support vector machines, random decision forest, that learn how gestures are performed from training data.

For gestures that require a given hand configuration/hand pose for the full sequence, a certain subset of the sequence, or at least one instance during execution of the gesture, an approach has been developed based on Hidden Markov Models to detect base trajectories, e.g. slide gestures along a defined direction, circular motion, waving, tapping, or freeze.

The architecture of hidden states, the state transition probabilities, and the state emission likelihoods are configured based on parametric models, incorporating intuitive concepts of travel distance, moving direction, velocity, and combinations of the former.

Optional these parameters could also be learned from training data if available, e.g. using the Baum-Welch algorithm.

The base trajectories are combined with the history of classifier states to the final output gesture. By that the hand pose can be integrated with the movement. Example implementations require a given hand pose to be present for a given period, or at least once during the execution of the gesture.

If the change of hand configuration/hand pose over time is an essential element of a gesture, the classifier state is included in the Hidden Markov Model emission likelihoods.

Instead of using the discrete output state of the classifier, it is also possible to use the raw output scores directly in conjunction with the Hidden Markov Model.

If the likelihood of being in a state considered to complete a gesture exceeds a configurable threshold, and/or its likelihood exceeds all other states, a gesture detection event is generated.

Such gesture events can be further processed, or filtered out e.g. based on context information on application level.

### List of reference numerals

- 10: system
- 11: 3D imaging unit
- 12: processing unit
- 12.1 to 12.7: module
- 13: output unit
- 14: box
- 15: finger tip
- 16: hand center

## Claims

1. System (10) for detecting hand gestures in a 3D space, comprising:
a 3D imaging unit (11) configured to capture 3D images of a scene, wherein each of the 3D images comprises a 2D intensity image of the scene,and
a processing unit (12) coupled to the 3D imaging unit (11), wherein the processing unit (12) is configured to
receive the 3D images from the 3D imaging unit (11),
use the 2D intensity image of at least one of the 3D images to classify the at least one 3D image, wherein classifying the at least one 3D image comprises distinguishing a hand in the 2D intensity image from other body parts and other objects and/or verifying whether the hand has a configuration from a predetermined configuration catalogue, and
detect a hand gesture in the 3D images based on the classification of the at least one 3D image.

2. System (10) as claimed in claim 1, wherein the at least one 3D image comprises a plurality of pixels and the processing unit (12) is further configured to detect pixels in the at least one 3D image potentially belonging to the image of a hand before the at least one 3D image is classified.

3. System as claimed in claim 2, wherein the processing unit (12) is further configured to filter the at least one 3D image in order to increase the contrast between pixels potentially belonging to the image of the hand and pixels potentially not belonging to the image of the hand.

4. System (10) as claimed in one of the preceding claims, wherein the processing unit (12) is further configured to generate a 3D sub-image of the at least one 3D image that includes the image of the hand and use the 2D intensity image of the 3D sub-image for the classification of the at least one 3D image.

5. System (10) as claimed in claim 4, wherein the processing unit (12) is further configured to scale image data of the at least one 3D image such that the 3D sub-image has a predetermined size and/or to rotate image data of the at least one 3D image such that a principal axis of the hand is aligned to a predetermined axis in the 3D sub-image.

6. System (10) as claimed in one of the preceding claims, wherein each of the 3D images comprises a depth map of the scene and the processing unit (12) is further configured to use the depth map of the at least one 3D image to classify the at least one 3D image.

7. System (10) as claimed in one of the preceding claims, wherein the predetermined configuration catalogue comprises a predetermined number of classes of hand configurations and the processing unit (12) is further configured to determine a probability value for each of the classes indicating the probability for the hand configuration in the at least one 3D image belonging to the respective class.

8. System (10) as claimed in claim 7, wherein the processing unit (12) is further configured to generate a discrete output state for the at least one 3D image based on the probability values for the classes.

9. System (10) as claimed in claim 7 or 8, wherein the processing unit (12) is further configured to specify that the hand configuration in the at least one 3D image does not belong to any of the classes if the difference between the highest probability value and the second highest probability value is smaller than a predetermined threshold.

10. System (10) as claimed in one of the preceding claims, wherein the processing unit (12) is further configured to use a convolutional neural network for the classification of the at least one 3D image.

11. System (10) as claimed in one of the preceding claims, wherein the processing unit (12) is further configured to compute hand coordinates if the image of a hand is detected in the at least one 3D image.

12. System (10) as claimed in claim 11, wherein the processing unit (12) is further configured to detect the motion of the hand in the 3D images and, subsequently, detect a gesture of the hand in the 3D images, wherein the detection of the hand gesture in the 3D images is based on the motion of the hand and the classification of the at least one 3D image.

13. System (10) as claimed in one of the preceding claims, wherein the 3D imaging unit (11) is a time-of-flight camera or a stereo vision camera or a structured light camera.

14. Vehicle comprising a system (10) as claimed in one of the preceding claims.

15. Method for detecting hand gestures in a 3D space, comprising:
capturing 3D images of a scene, wherein each of the 3D images comprises a 2D intensity image of the scene;
using the 2D intensity image of at least one of the 3D images to classify the at least one 3D image, wherein classifying the at least one 3D image comprises distinguishing a hand in the 2D intensity image from other body parts and other objects and/or verifying whether the hand has a configuration from a predetermined configuration catalogue; and
detecting a hand gesture in the 3D images based on the classification of the at least one 3D image.
